# EUROPEAN PATENT APPLICATION

(11) **EP 4 385 592 A1**
(43) Date of publication of application: **19.06.2024**
(21) Application number: 23210885.2
(22) Date of filing: 20.11.2023
(51) Int. Cl.: A63F 13/655, A63F 13/79, A63F 13/67

(54) **COMPUTER-IMPLEMENTED METHOD FOR CONTROLLING A VIRTUAL AVATAR**

(30) Priority: 08.12.2022 GB 202218444
(71) Applicant: Sony Interactive Entertainment Europe Limited, London W1F 7LP (GB); Sony Interactive Entertainment LLC, San Mateo, CA 94404 (US)
(72) Inventor: STEMPLE, Lloyd, London W1F 7LP (GB); VISCIGLIA, Aron, London W1F 7LP (GB); KAWAMURA, Daisuke, London W1F 7LP (GB); BHAT, Ramanath, London W1F 7LP (GB); LEYTON, Pedro, London W1F 7LP (GB); UBERTI, David, London W1F 7LP (GB)
(74) Representative: Murgitroyd & Company

(57) **Abstract**

A computer-implemented method for controlling a virtual avatar on an electronic device, the method comprising: providing a base model that defines a virtual avatar associated with a user profile corresponding to a user; receiving input data from at least one of a plurality of multimedia input sources; processing the input data; determining a baseline avatar and a dynamic avatar using the processed input data; generating an output avatar based on the determined baseline avatar and the determined dynamic avatar; updating the base model by adding the generated output avatar to the base model; and rendering the updated base model to display the virtual avatar on a display screen.

## Description

### Field

The present specification relates to a computer implemented method and system. Particularly, the present specification relates to computer-implemented systems and methods for controlling a virtual avatar on an electronic device.

### Background

More and more of our lives are spent interacting in digital environments on digital platforms. A virtual avatar may be considered to be a graphical representation of a user's character on a digital platform. A virtual avatar can have a two-dimensional form (e.g. an image or icon) or a three-dimensional form (e.g. the character in a computer game).

It is known for virtual avatars to be customisable by the user using a virtual avatar rather than an image or video of the user has allowed the user to maintain some anonymity in the digital world. The use of virtual avatars is not limited to gaming, as increasingly virtual avatars are being used to represent users in digital events, meetings, and in interactive training exercises.

As technology has progressed, virtual avatars have become more advanced and more lifelike. However, there is still a need for an improved system and method for controlling a virtual avatar that is accurate, resilient and responsive.

Aspects and embodiments are conceived with the foregoing in mind.

### Summary

Aspects and embodiments relate to virtual avatars, which may be used to graphically represent a user inside a computer generated entertainment environment such as, for example, a computer game or a content streaming service.

According to a first aspect of the present disclosure, there is provided a computer-implemented method for controlling a virtual avatar on an electronic device. The electronic device may be any computing resource that is commonly used for gaming, such as for example a gaming console, PC, tablet, smart watch, TV, smartphone, an extended reality headset, a cloud-based computing resource, or a plurality of distinct computing resources each with their own processing capability. The cloud-based computing resource may comprise a plurality of cloud instances or virtual machines. The method may comprise providing a base model that defines a virtual avatar associated with a user profile corresponding to a user; receiving input data from at least one of a plurality of multimedia input sources; processing the input data; determining a baseline avatar and a dynamic avatar using the processed input data; generating an output avatar based on the determined baseline avatar and the determined dynamic avatar; updating the base model using the output avatar so as to update at least one property of the virtual avatar; and rendering the updated base model to display the virtual avatar on a display screen.

The claimed method may be initialised responsive to user input on the electronic device. This may be at the start of or during an interactive session with a computer generated entertainment environment. The claimed method may be implemented in real-time responsive to the user's interaction with the computer generated entertainment environment.

The virtual avatar may be a graphical representation of the given user. In some embodiments, the virtual avatar may be a full-body 3D avatar. In some embodiments, the virtual avatar may be a half-body 3D avatar with just head and upper body. In some embodiments, the base model may comprise a series of blend shapes. The base model may be a data structure which stores a default avatar mesh and default values for the blend shapes and avatar specific parameters. The user profile may be a collection of settings, information and/or characteristics specific to an individual, such as the user's name and age, and/or the information of a game character associated with the user. The baseline avatar can be viewed as a first intermediate avatar which may vary in a game in a predefined manner (e.g., as determined by the game play data). The dynamic avatar can be viewed as a second intermediate avatar which may track the user's live behaviours, facial expressions, and/or emotions in a dynamic manner. The output avatar may be a result of combining the baseline avatar and the dynamic avatar in a predefined manner (e.g., the weighted average of the baseline avatar and the dynamic avatar).

Advantageously, in the present disclosure input data is received from a plurality of sources, rather than just a single input source. This reduces the reliance of the method on particular input sources and improves resilience to network errors, or faults with particular input sources. In particular, the generation of the output avatar is at least partially influenced by the user's live behaviours, facial expressions, and/or emotions, the virtual avatar is capable of mimicking the user in a more accurate manner, thereby rendering a more immersive and a more responsive game playing experience.

Optionally, the plurality of input sources may comprise an imaging source configured to provide images of the user's face. The images of the user's face allow the live facial expressions of the user to be captured and subsequently translated into the facial expression of the virtual avatar.

Optionally, determining the baseline avatar and the dynamic avatar may comprise respectively determining a baseline facial expression and a dynamic facial expression of the avatar, and optionally the dynamic facial expression of the avatar is determined using the images of the user's face.

Optionally, generating the output avatar may comprise generating an output facial expression of the avatar based on the determined baseline facial expression and the determined dynamic facial expression.

Optionally, the base model may comprise a plurality of facial expression models, each facial expression model being configured to define one aspect of facial expression of the avatar, and the base model comprises a plurality of sets of predefined weights, each predefined weight being applicable to configure one of the plurality of facial expression models and each set of predefined weights being applicable to the plurality of facial expression models for determining a baseline facial expression.

Optionally, the plurality of facial expression models may comprise a plurality of blend shapes, each blend shape defining a different portion of a face mesh.

Blend shape based facial tracking is an industry standard animation technique with extremely high fidelity. Blend shape animation is particularly useful for facial animation as it reduces the number of joints needed to define a face. An advantage of blend shape facial animation is that one expression value can work for multiple virtual avatars, both human and non-human characters. Blend shape animation is also supported across multiple technologies.

Optionally, determining the baseline facial expression may comprise: determining a set of predefined weights among the plurality of sets of predefined weights using the processed input data; and generating the baseline facial expression by multiplying each weight of the set of predefined weights with its corresponding facial expression model to generate a weighted baseline facial expression model; and combining all of weighted baseline facial expression models.

Optionally, determining the dynamic facial expression may comprise: determining a set of dynamic weights using the images of the user's face, each dynamic weight being applicable to configure one of the plurality of facial expression models; and generating the dynamic facial expression by multiplying each weight of the set of dynamic weights with its corresponding facial expression model to generate a weighted dynamic facial expression model; and combining all of weighted dynamic facial expression models.

Optionally, generating the output facial expression of the avatar may comprise: determining a first output weight and a second output weight; generating a set of average output weights by: multiplying each weight of the set of predefined weights with a first output weight to generate a modified first output weight; multiplying each weight of the set of dynamic weights with a second output weight to generate a modified second output weight; adding each modified first output weight and a corresponding modified second output weight to generate an average output weight; and generating the output facial expression by multiplying each weight of the set of average output weights with its corresponding facial expression model to generate a weighted average facial expression model and then combining all of weighted average facial expression models.

Generating an output avatar facial expression of the virtual avatar by combining a baseline facial expression and a dynamic facial expression in a weighted manner is advantageous in that the avatar can seamlessly transition between being animated by predefined motions/poses and being animated by the user's live tracked facial expression. In cases where the face of the avatar is animated directly through facial tracking, the accuracy of the facial expression representation will be improved significantly. The above-described approach also provides a way for the animation of the face to be overtaken by other sources of animation (e.g., motion/poses predefined by the character artist). The transition between facial expressions may be smoothed using a smooth, continuous transfer function such as, for example, a hyperbolic tan function which reduces the sharpness in the transition between the facial expressions.

Optionally, the set of dynamic weights and the first and second output weights may be determined by an artificial neural network (ANN), wherein the ANN is configured to: receive at least a portion of the input data and/or the processed input data, and in response to the data received, output desired data or instructions.

Optionally, determining the first and second output weights may comprise: providing a plurality of pairs of first output weight and second output weight, each of the plurality of pairs of first output weight and second output weight being associated with one of a plurality of predefined emotions; determining an emotion using the processed input data; and determining a pair of first output weight and second output weight from the plurality of pairs of first output weight and second output weight by mapping the determined emotion to the plurality of predefined emotions.

Optionally, the first output weight and the second output weight are set by the user.

Optionally, if the imaging source stops providing images for at least a period of time, the method may comprise: determining an idle facial expression; and updating the base model by adding the idle facial expression to the base model.

Optionally, determining the idle facial expression may comprise: determining a set of idle weights, each idle weight being applicable to configure one of the plurality of facial expression models; and generating an idle facial expression by multiplying each weight of the set of idle weights with its corresponding facial expression model to generate a weighted idle facial expression model and then combining all of weighted idle facial expression models.

Such a configuration allows the avatar to seamlessly transition to fall-back behaviour (expressions/motions/animations) if there is a lack of input from the user. In this way, the avatar can continue to be expressive even if not being actively/directly influenced by the user controlling it.

Optionally, the set of idle weights may be one of the plurality of sets of predefined weights.

Optionally, processing the input data may comprise applying facial tracking to the images captured by the imaging source to construct a 3D mesh.

Optionally, the plurality of multimedia input sources further comprises one or more of:
an audio input configured to capture audio from a user;
a user input device or user interface device;
a user electronic device or a network connection to an electronic device;
a game or an application executed on an electronic device; and/or
an AI, or game AI.

Optionally, the plurality of multimedia input sources comprises a memory, the memory comprising data related to the virtual avatar, or to at least one previous version of the virtual avatar, associated with the user profile.

The method may further comprise storing in the memory the updated base model and/or data defining the updated base model; and/or at least a portion of the input data, or processed input data.

Optionally, the plurality of input sources further comprises an audio input configured to capture audio from the user; and wherein processing the input data comprises determining the volume of the audio captured by the audio input.

Optionally, the plurality of input sources further comprises a user interface device, and the method comprises: receiving a user input from the user interface device.

Optionally, the input data comprises gameplay data from a game the user is playing on the electronic device.

Optionally, the input data comprises gameplay data from a game the user is playing on another electronic device which is in communication with the electronic device.

In a second aspect, the disclosure provides an electronic device configured to carry out the method of any of the embodiments or examples recited in the first aspect of the disclosure.

The electronic device may comprise a processor and memory. The memory may comprise a set of executable instructions to cause the processor to carry out the method of the present disclosure.

The processor may comprise a facial tracking processor or module configured to track the user's face by analysing the images provided by the imaging source.

The electronic device may be a handheld electronic device.

Optionally, the electronic device may be a smartphone. The smartphone may comprise at least one of the plurality of input sources. In other words, at least one of the plurality of input sources may be integral to the smartphone.

### Brief Description of the Drawings

Illustrative embodiments of this disclosure will be described hereinafter, by way of example only, with reference to the accompanying drawings in which like reference signs relate to like elements and in which:
**Figure 1** shows a schematic illustration of a system according to an embodiment of the present disclosure;
**Figure 2** shows a schematic illustration of a system according to another embodiment of the present disclosure;
**Figure 3** is a flowchart of a method for controlling a virtual avatar on an electronic device according to an embodiment of the present disclosure; and
**Figure 4** is a schematic illustration of an example implementation of the method for controlling a virtual avatar on an electronic device (e.g., as shown in Figure 3).

### Detailed Description

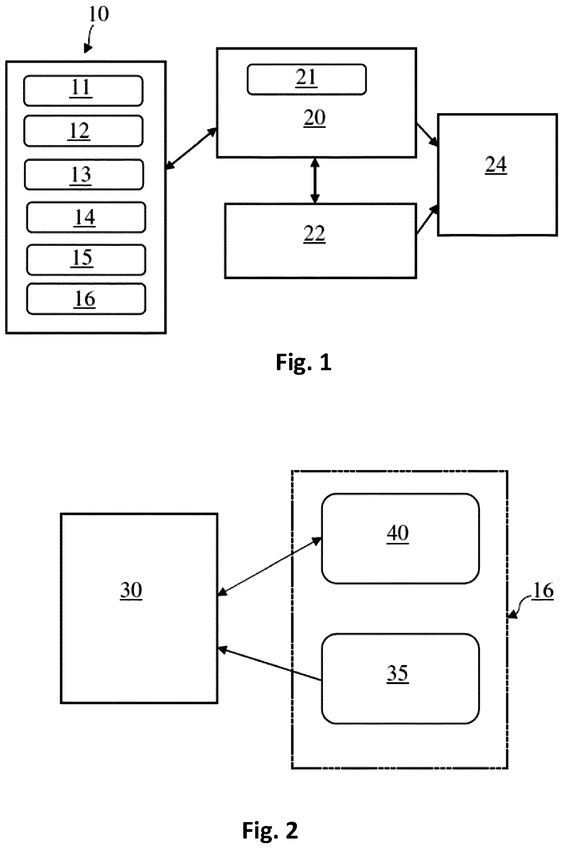

Figures 1 to 4 are associated with embodiments of a computer-implemented method for controlling one or more virtual avatars on an electronic device. The electronic device may be any computing resource that is commonly used for gaming, such as for example a gaming console, PC, tablet, smart watch, TV, smartphone, an extended reality headset, a cloud-based computing resource, or a plurality of distinct computing resources each with their own processing capability. The cloud-based computing resource may comprise a plurality of cloud instances or virtual machines. The method may comprise: providing a base model that defines a virtual avatar associated with a user profile corresponding to a user; receiving input data from at least one of a plurality of multimedia input sources; processing the input data; determining a baseline avatar and a dynamic avatar using the processed input data; generating an output avatar based on the determined baseline avatar and the determined dynamic avatar; updating the base model using the output avatar so as to update at least one property of the virtual avatar; and rendering the updated base model to display the virtual avatar on a display screen.

Figure 1 is a diagram representing a system for controlling at least one virtual avatar in accordance with an embodiment of the present disclosure. The system may comprise a plurality of multimedia input sources 10, a processor 20, and a memory or storage device 22.

The processor 20 may be in communication with memory or storage device 22. The memory or storage device 22 and the processor 20 may be both in communication with a display screen 24 on which the virtual avatar is displayed. Said communication between different components of the system may be achieved by any suitable means, e.g., through a wired or wireless connection using any suitable telecommunication protocol. The memory or storage device 22 may be configured to store the base model that defines a virtual avatar associated with the user profile corresponding to the user, and a set of instructions configured to be executed by the processor 20. A plurality of predetermined animations or animations sequences, and/or poses and/or emotions may be stored in the memory 22 for a given virtual avatar.

The display screen 24, processor 20, memory 22 and at least one of the plurality of multimedia input sources may be comprised in an electronic device, e.g., as shown in Figure 2. In some embodiments, some or all of the components of the system may be connected over the cloud. In some embodiments, some or all of the components of the system may be contained in the same electronic device.

Each of the plurality of multimedia input sources 10 may have an active state and an inactive state. In the active state the input source is configured to transmit input data to the processor 20 using any suitable telecommunication protocol. The system (e.g. the processor 20) can control which of the multimedia input sources is in an active state and which is in an inactive state. This may be done for example using fall-back logic. In this embodiment, the plurality of multimedia input sources 10 may comprise an imaging source 11, an audio input 12, a user interface device 13, an AI input 14, local application 15, and a network connection 16.

The imaging source 11 may be a camera configured to capture images of a user's face. The imaging source 11 may be integral to the user's electronic device 30 (see Figure 2). A default state of the imaging source may be the active state. The imaging source 11 may be in communication with an input controller 21, which forms part of the processor 20. The input controller 21 may comprise a facial tracking module (not shown) configured to apply facial tracking techniques to the images captured by the imaging source 11. The facial tracking module may be configured to determine the user's dynamic facial expression from the images provided.

The facial tracking module may apply a 3D mesh, or a 3D mesh mask, to the captured images of the user's face. The 3D mesh may be constructed from a plurality of markers located at key facial landmarks of the user's face. The facial tracking module may track movement of the 3D mesh, or the facial landmarks, to track changes in the user's facial expression. The changes in the user's facial expression may occur, for example, whilst the user is interacting with a gameplay session using the electronic device and/or the display screen 24. For instance, the user may smile during the gameplay session and the changes in the user's facial expression will be tracked by the facial tracking module. Alternatively, the user may shout in frustration and this change in the user's facial expression will also be tracked by the facial tracking module.

The audio input 12 may be configured to capture audio from the user. The audio input 12 may be a microphone. The audio input 12 may be integral to the user's electronic device 30, or alterative the audio input 12 may be external to the electronic device 30. Optionally, the default state of the audio input 12 may be the inactive state. As such, input data may not be transmitted from the audio input to the processor 20 until the processor 20 activates the audio input 12. In some embodiments, the audio input 12 may be moved to the active state if no input data is received from the imaging source 11, or in response to the imaging source 11 being in the inactive state. The audio input 12 may only be moved to the active state when the avatar enters an idle state. It may be, for example, that the imaging source 11 is powered down or it may be that the network connection with the imaging source fails. This means the inputs through the audio input 12 can be used to generate changes in the avatar.

When the audio input 12 is in the active state, the processor 20 may be configured to determine the volume (loudness) of the captured audio using any suitable technique. The base model may be updated to control the avatar based on the determined volume of the captured audio. In some embodiments, the base model is updated to move or alter at least one of a mouth, jaw, or other facial feature of the virtual avatar depending on the determined volume. This may give the appearance that the virtual avatar is 'tracking' the user's face, even though the facial tracking module of the input controller is inactive due to the lack of images provided by the imaging source 11.

In some embodiments, the processor 20 may be configured to provide a speech-to-text function, when the audio input is in an active state. The processor 20 may comprise speech recognition software. The processor 20 may analyse the captured audio transmitted by the audio input 12 to determine what the user is saying and convert this into text. The text may displayed on the display screen 24, for example in a speech bubble next to the virtual avatar. A number of different `off the shelf speech-to-text frameworks are available, which could be used in the present system. The speech-to-text functionality to be activated or disabled by the user. That is to say, input sources other than the imaging source may be used to provide input which can be used to register input which can be used to generate changes in the avatar.

The user interface device 13 may be a controller, keypad, keyboard, mouse, touchscreen or other device for receiving an input from a user. An input from the user interface device 13 may trigger a pose, action, particular animation, or facial expression of the virtual avatar that is associated with the input. For example, if the user pushes a certain button on the user interface device 13 this may cause the virtual avatar to wave, or celebrate, or a text bubble may be displayed, or a particular visual effect such as falling confetti may be triggered. High frequency inputs such as very high amounts of button presses may be indicative of stress and consequently cause the virtual avatar to display a stressed facial expression.

A list or table of inputs from the user interface device 13 and the associated virtual avatar response or particular effect may be stored in the memory 22. The user may be able to customise this list or table.

Optionally, some inputs from the user interface device 13 may require a second user to be present in order to trigger an event or effect.

In the gaming industry it is known for artificial intelligence (AI) to be used to generate responsive, or adaptive behaviours in non-player characters (NPCs). This can be referred to as "game Al". The plurality of input sources 10 may comprise an AI input 14, which may be a "game AI" input. The AI input 14 may receive data from one or more of the other input sources 10 and/or from the processor 20. The AI input 14 may comprise a set of algorithms and, in response to the data received, the AI input 14 may output instructions that cause the base model to be updated. The AI input 14 may instruct the base model to be updated such that the avatar executes a certain animation sequence or displays a certain facial expression.

For example, if input data received from the plurality of input sources 10 cause the base model to update the blend shape values of the avatar to display a "sad" emotion, the AI input 14 may be programmed to trigger a crying animation after the sad emotion has been displayed for a given time period. Thus, the AI input 14 may allow for a greater range of animations and control of the avatar and may supplement the response triggered by the other input sources 10.

In other embodiments, the AI input 14 may involve machine learning, rather than being a "game AI". Thus, the AI input 14 may be provided from another data model such as an Artificial Neural Network (ANN) and, in some cases, a convolutional neural network (CNN).

ANNs (including CNNs) are computational models inspired by biological neural networks and are used to approximate functions that are generally unknown. ANNs can be hardware (neurons are represented by physical components) or software-based (computer models) and can use a variety of topologies and learning algorithms. ANNs can be configured to approximate and derive functions without a prior knowledge of a task that is to be performed and instead, they evolve their own set of relevant characteristics from learning material that they process. A convolutional neural network (CNN) employs the mathematical operation of convolution in in at least one of their layers and are widely used for image mapping and classification applications.

In some examples, ANNs usually have three layers that are interconnected. The first layer may consist of input neurons. These input neurons send data on to the second layer, referred to a hidden layer which implements a function and which in turn sends output neurons to the third layer. With respect to the number of neurons in the input layer, this may be based on training data or reference data relating to traits of an avatar provided to train the ANN for detecting similar traits and modifying the avatar accordingly.

The second or hidden layer in a neural network implements one or more functions. There may be a plurality of hidden layers in the ANN. For example, the function or functions may each compute a linear transformation of the previous layer or compute logical functions. For instance, considering that an input vector can be represented as x, the hidden layer functions as h and the output as y, then the ANN may be understood as implementing a function of using the second or hidden layer that maps from x to h and another function g that maps from h to y. So, the hidden layer's activation is f(x) and the output of the network is g(f(x)).

In some examples, in order to train the ANN to detect a characteristic associated with a feature of interest pertaining to an avatar, such as a frown, raised hand, tossing of the head to say yes or no etc, the following information may need to be provided to the data model:
(i) a plurality of training media files such as an image or sound, each training media file having one or more traits of a certain type;
(ii) for a given training media file among said plurality:
   - one or more training inputs, such as a label for a feature of interest, associated with the given input; and
   - a training output identifying a specific type of trait, such as a particular static or dynamic attribute to be applied to the avatar that is associated with the feature of interest, i.e. a representation of the trait pertaining to the label.

In one example, a training image used to train the ANN may be a red face with a frown, for which a training input may be a graph or similar representing a path taken by a facial tracking module associated with a frown to represent anger. The training output may then be a trigger or executable instructions for the avatar to present a red angry face for that for that input path.

After sufficient instances, the model may then be trained to automatically detect the feature of a facial tracking path for a frown and automatically apply a classification, for instance, "this is recognised as anger" and then instruct the base model to update the avatar to apply the angry face for any new live or real time input that contains is similar to the feature of interest.

It will be appreciated that the AI input 14 could comprise elements of both "game AI" and machine learning, as described above.

The local application 15 may be an application or program running on the user's electronic device 30 that is configured to provide input data to the processor 20. For example, the local application 15 may be a weather application, which may transmit an indication of the current weather to the processor 20. If the weather is sunny, the virtual avatar may be updated to be happy, or to wear sunglasses, or an indication of the weather may be displayed as a background on the display screen. The local application 15 may be any kind of application that may provide useful data to the processor 20, such as data about the user's behaviour, current mood, current activity, or environment.

In some embodiments, the memory 22 may be considered to be one of the plurality of input sources 10. The memory 22 may store past avatar data, for example including previous avatar blend shape values and previous avatar positions. The past data may be used to blend the blend shape values and/or avatar pose when rendering or updating the virtual avatar.

As shown in Figure 2, the network connection 16 may be a communication channel between the user's electronic device 30 (e.g. the processor 20) and an additional electronic device 35 associated with the user. The additional electronic device 35 may be a gaming console, PC, tablet, smart watch, TV, or smartphone. The additional electronic device 35 may be associated with the user. As described above in relation to the local application 15, the additional electronic device 35 may be configured to transmit data to the processor 20 via the network connection 14. The data transmitted over network 14 may be notifications or data about the user's behaviour, current mood, current activity, or environment.

In an embodiment, the user may be playing a game on the additional electronic device 35. Thus, the network connection 16 may be configured to transmit game play data to the processor 20. Alternatively, if the user is playing a game on the electronic device 30 (rather than the additional electronic device 35), game play data may be transmitted from the local application 15 to the processor 20.

A given event or result (e.g., as determined from the game play data) in the game being played, either on the user's electronic device 30 or the additional electronic device 35, may trigger a notification to be output to the processor 20. The notification may be associated with a pose, action, particular animation, emotion, or facial expression of the virtual avatar. For example, if the user wins the game (e.g., as determined from the game play data) this may cause the virtual avatar to celebrate, or a particular effect such as falling confetti may be triggered. If the user gets hit by something in the game, an explosion may be displayed on the screen.

A list or table of trigger events, or game play notifications, from the network input 16 or the local application 15, and the associated virtual avatar response or particular effect may be stored in the memory 22. The user may be able to customise this list or table.

Thus, gameplay events may influence the virtual avatar behaviour.

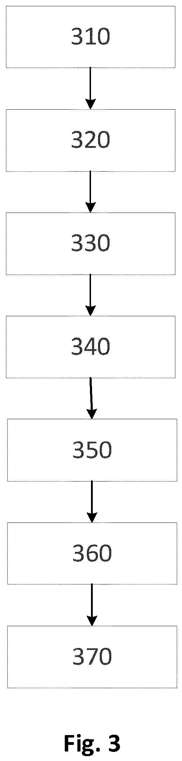

With reference to Figure 3, in an embodiment, the processor 20 may be configured to perform the following seven steps.

At step 310, the processor 20 may be configured to provide a base model that defines a virtual avatar associated with a user profile corresponding to a user.

The virtual avatar may be defined in the base model by a series of blend shape values, rotations, positions and poses. The base model may define the virtual avatar in a neutral or expressionless state. The base model may also provide a default expression which is designated by the associated user profile. For example, a user who generally adopts a happy demeanour may set the default expression to be happy. Thus, the base model may be a data structure which stores a default avatar mesh and default values for the blend shapes and avatar specific parameters (such as retargeting rotations and positions, retargeting blend shapes index, animations, etc.). The data structure can be written in any programming language.

In an embodiment, the base model may comprise a plurality of facial expression models, wherein each facial expression model may be configured to define one aspect of facial expression of the avatar (and thus represents a different facial expression). An aspect of facial expression of the avatar may be the appearance (e.g., position and/or shape) of a certain portion (e.g., mouth, nose, left eye, right eye, left eyebrow, and right eyebrow) of an avatar face. In an embodiment, the plurality of facial expression models may comprise a plurality of blend shapes, each blend shape defining a different portion of a face mesh.

Blend shape (also known as morph target) animation is one of several known techniques for facial animation. Blend shape based facial tracking is an industry standard animation technique with extremely high fidelity. Blend shape animation is particularly useful for facial animation as it reduces the number of joints needed to define a face.

In blend shape animation, the virtual avatar to be animated may be first modelled with a neutral expression, which may be done using a 3D mesh, and the vertex positions of the 3D mesh are stored. Such a 3D mesh may be the base model. A library of blend shapes may be provided, wherein each blend shape may be used to controllably deform the 3D mesh into a different facial expression, which is achieved by allowing a range of vertex positions to be interpolated within an acceptable (visually appropriate) range. The library of blend shapes may be stored in the memory 22.

In an embodiment, the base model may comprise a plurality of sets of predefined weights, wherein each predefined weight may be applicable to configure one of the plurality of blend shapes and each set of predefined weights may be applicable to the plurality of facial expression models for determining a baseline facial expression. The plurality of sets of predefined weights may be stored in the form of a library of weights in the memory 22.

For example, each blend shape may be configured to represent a specific facial expression, e.g., a face with an open mouth, a face with a raised left eyebrow, a face with tears appearing under one eye, a face with left eye closed, or a face with the corner of the mouth uplift (part of a smiling face), etc. For each blend shape, the vertex positions of a corresponding portion (e.g., mouth, eyebrow, tears, or left eye, etc.) of the face mesh may be controllably movable within a predefined range. The value of each predefined weight (or the blend shape value) may correspond to a specific set of vertex positions that defines a specific facial expression, e.g., a face with the left eyebrow being raised to a specific position and having a specific shape. In some example implementations, the value of each predefined weight may be any integer (e.g., 1, 6, 55, or 80...) in the range between 0 and 100. In other example implementations, the value of each predefined weight may be any number (e.g., 0.1, 0.3, 0.5, or 0.9) in the range between 0 and 1.

Each set of the plurality sets of predefined weights may be applied to the plurality of blend shapes such that each blend shape is individually configured or defined by a corresponding predefined weight of the set of predefined weights. Once each of the plurality of blend shapes is configured, all of the blend shapes may then be combined to generate a predefined facial expression which may express a specific emotion, e.g., sad, happy, tired, or sleepy.

At step 320, the processor 20 may be configured to receive input data from at least one of a plurality of multimedia input sources.

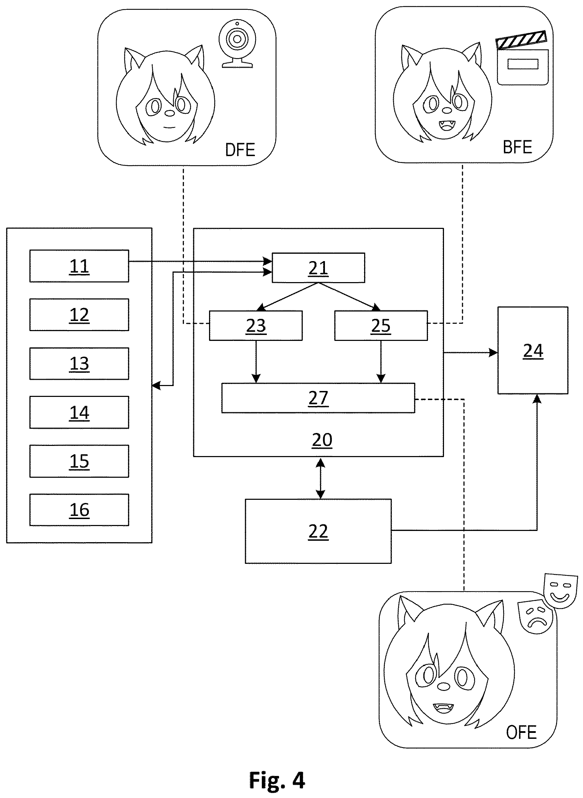

With reference to Figure 4, in an example scenario, the input controller 21 may receive input data from the imaging source 11 and the local application 15. Correspondingly, the input data may comprise images of the user's face captured by the imaging source 11 and game play data provided by the local application 15. Note that this example scenario is a simplified scenario for the purpose of describing the concept of the method. In reality, the processor 20 may receive additional input data from one or more other input sources, such as the audio input 12, the user interface device 13, the AI input 14, and/or the network connection 16.

At step 330, the processor 20 may be configured to process the input data received from the plurality of multimedia input sources 10.

With continued reference to Figure 4, the images of the user may be processed by the facial tracking module of the input controller 21. The facial tracking module may be configured to analyse the images of the user's face and construct a 3D mesh based on the image analysis. The input controller 21 may transmit the constructed 3D mesh to a dynamic avatar module 23 for generating a dynamic facial expression (see step 340 below).

The game play data may be processed by an emotion state module (not shown) of the internal controller 21. The emotion state module may be configured to analyse the game play data to extract certain information and use the extracted information to determine animations or animations sequence, and/or poses, and/or emotions of the avatar. In an example implementation, the emotion state module may consult the memory 22 by mapping the processed game play data to a library of predetermined emotions and thus retrieve an emotion associated with the processed game play data. After the emotion of the avatar has been determined, the input controller 21 may transmit the determined emotion to a baseline avatar module 25 for generating a baseline facial expression (see step 340 below).

In an embodiment, the baseline facial expression may be predominantly determined by the game play data and thus may not be influenced by the user's behaviour and/or current mood. Whereas, the dynamic facial expression may be predominantly determined by the user's behaviour and/or current mood.

In cases where the input data is received from multiple input sources, the input data may be aggregated in a weighted manner, meaning a weight is assigned to every input source proportional to how the input source contributes to the final model performance, i.e. output avatar. In an embodiment, each of the input sources may have the same weight in terms of aggregating the input data. In an embodiment, certain input sources may have a higher weighting than other input sources. For example, when the imaging source 11 is active, images captured by the imaging source 11 may have a higher degree of influence on the dynamic avatar (see below) than the audio input 12 or the user interface device 13 for determining the dynamic facial expression of the avatar.

At step 340, the processor 20 may be configured to determine a baseline avatar and a dynamic avatar using the processed input data.

In an embodiment, determining the baseline avatar and the dynamic avatar may comprise respectively determining a baseline facial expression and a dynamic facial expression of the avatar.

In an embodiment, determining the baseline facial expression may comprise: determining a set of predefined weights among the plurality of sets of predefined weights using the processed input data; and generating the baseline facial expression by multiplying each weight of the set of predefined weights with its corresponding facial expression model to generate a weighted baseline facial expression model; and combining all of weighted baseline facial expression models.

For example, referring back to Figure 4, after analysing the game play data, the emotion state module of the internal controller 21 may determine that the avatar should be in a "sad" emotion for the moment of time or for a certain period of time. Then, the input controller 21 may transmit the determined emotion to the baseline avatar module 25 of the processor 20 which may consult the library of weights stored in the memory 22 to determine a set of predefined weights that corresponds to the "sad" emotion. The baseline avatar module 25 may multiply each of the determined set of predefined weights with a corresponding blend shape to generate a weighted baseline blend shape. The baseline avatar module 25 may then combine all of the weighted baseline blend shapes to generate the baseline facial expression BFE of the avatar. As shown in Figure 4, the game play data suggested that the character in the game was in a "happy" mood and accordingly the generated baseline facial expression BFE communicated a "happy" emotion.

In an embodiment, the dynamic facial expression of the avatar may be determined using the images of the user's face. In an embodiment, the dynamic facial expression of the avatar may be determined using the input data received from input sources other than the imaging source 11. In an embodiment, determining the dynamic facial expression may comprise: determining a set of dynamic weights using the images of the user's face, each dynamic weight being applicable to configure one of the plurality of facial expression models; and generating the dynamic facial expression by multiplying each weight of the set of dynamic weights with its corresponding facial expression model to generate a weighted dynamic facial expression model; and combining all of weighted dynamic facial expression models.

Continuing the example above, the facial tracking module of the internal controller 21 may process the images captured by the imaging source 11 to construct a 3D mesh. The input controller 21 may transmit the constructed 3D mesh to the dynamic avatar module 23 which may then determine a set of dynamic weights based on the constructed 3D mesh (or the target 3D mesh). The determination may be achieved by means of a best-fit algorithm configured to vary one or more weights of the plurality of blend shapes until the differences between the 3D face mesh (defining the dynamic facial expression DFE) as a result of combining all the weighted blend shapes and the constructed 3D mesh are minimized. Once the set of dynamic weights has been determined, the dynamic avatar module 23 may multiply each of the determined set of dynamic weights with a corresponding blend shape to generate a weighted dynamic blend shape. The dynamic avatar module 23 may then combine all of the weighted dynamic blend shapes to generate the dynamic facial expression DFE of the avatar. As shown in Figure 4, even though the character in the game had a happy mood, for whatever reason, the user was actually in a "sad" mood. The user's live facial expression was captured by the imaging source 11 and subsequently translated into the dynamic facial expression DFE which displayed a "sad" emotion.

At step 350, the processor 20 may be configured to generate an output avatar based on the determined baseline avatar and the determined dynamic avatar.

In an embodiment, generating the output avatar may comprise generating an output facial expression of the avatar based on the determined baseline facial expression and the determined dynamic facial expression.

In an embodiment, generating the output facial expression of the avatar may comprise: determining a first output weight and a second output weight; generating a set of average output weights by: multiplying each weight of the set of predefined weights with a first output weight to generate a modified predefined weight; multiplying each weight of the set of dynamic weights with a second output weight to generate a modified dynamic weight; adding each modified baseline weight and a corresponding modified dynamic weight to generate an average output weight; and generating the output facial expression by multiplying each weight of the set of average output weights with its corresponding facial expression model to generate a weighted average facial expression model and then combining all of weighted average facial expression models.

Continuing the example above and with reference to Figure 4, the determined set of baseline weights that defines the baseline facial expression BFE and the determined set of dynamic weights that defines the dynamic facial expression DFE may be transmitted respectively to an output avatar module 27 of the processor 20. The output avatar module 27 may be configured to combine the baseline facial expression BFE and the dynamic facial expression DFE in a predefined manner to generate an output facial expression OFE of the avatar. The output avatar module 27 may be configured to determine a first output weight for the baseline facial expression and a second output weight for the dynamic facial expression. In an example implementation, the sum of the first output weight and the second output weight may be equal to 1. The values of the first output weight and the second output weight may be dynamically updated by the processor 20 while playing or manually set by the user which may last a certain period of time.

Once determined, the output avatar module 27 may be configured to apply the first output weight to the set of baseline weights to generate a set of modified baseline weights and apply the second output weight to the set of dynamic weights to generate a set of modified dynamic weights. The output avatar module 27 may add each modified baseline weight and a corresponding modified dynamic weight to generate an average output weight. The output avatar module 27 may generate the output facial expression by multiplying each weight of the set of average output weights with its corresponding blend shape to generate a weighted average blend shape and the output avatar module 27 may then combine all of weighted average blend shapes to generate an output 3D face mesh. As shown in Figure 4, the output facial expression OFE is generated after combining the "sad" dynamic facial expression DFE and the "happy" baseline facial expression BFE in a weighted manner. As a result, the output facial expression OFE communicated an emotion sitting between the "sad" dynamic emotion and the "happy" baseline emotion.

In an embodiment, determining the first and second output weights may comprise providing a plurality of pairs of first output weight and second output weight, wherein each of the plurality of pairs of first output weight and second output weight may be associated with one of a plurality of predefined emotions (which may be stored in the memory, see above); determining an emotion using the processed input data; and determining a pair of first output weight and second output weight based on the determined emotions by mapping the determined emotion to the plurality of predefined emotions.

In an example implementation, the first and second output weights may each have a default value of 0.5, which may correspond to a "neutral" emotion. Said default values may change dynamically in accordance with the emotion determined while playing. For example, when the emotion changes from being "neutral" to being "very happy", the output avatar module 27 may increase the first output weight from 0.5 to 0.9 and decrease the second output weight from 0.5 to 0.1. As such, the output facial expression is predominantly affected by the baseline facial expression because of its much higher weighting.

In the case where a context animation should play (e.g., based on a trigger, the user's avatar should yawn), the output avatar module 27 may temporally override the present values (e.g., the first output weight and the second output weight both being 0.5) of the first and second output weights and may set them to two predefined values (e.g., set the first output weight to 1.0 and the second output weight to 0.0). In this way, the animated motion for the yawn can be shown during the period that the yawn animation plays, but on finishing the yawn animation, the output avatar module 27 may automatically set the first and second output weights back to the values before the triggered animation started playing. From then, the first and second output weights may be updated dynamically again.

Generating an output avatar (e.g., an output avatar facial expression) in the above-described manner may have an advantage that the avatar can seamlessly transition between being animated by predefined motions/poses and being animated by the user's live tracked facial expression. In cases where the face of the avatar is animated directly through facial tracking, the accuracy of the facial expression representation will be improved significantly. The above-described approach also provides a way for the animation of the face to be overtaken by other sources of animation (e.g., motion/poses predefined by the character artist).

In some cases, the user may manually set the mood of a character in a game for a period of time. This may be done at any stage of the game (e.g., at the start of the game or while playing the game). For example, the user may have a very happy mood at the start of the game, and thus may manually set the user mood to "happy". This may be done in the user profile via the user interface device 13. Upon receiving the user-set emotion from the user interface device 13, the processor 20 may be configured to suppress any conflicting facial expression determined during the game but may not fully prevent their influence on the end-result animation or the output facial expression OFE.

In the case where the imaging source 11 stops providing images for at least a period of time (e.g., due to the camera being obscured), the output avatar module 27 may be configured to determine an idle facial expression. In an embodiment, the output avatar module 27 may be configured to determine a set of idle weights, each idle weight being applicable to configure one of the plurality of blend shapes. The output avatar module 27 may be configured to generate an idle facial expression by multiplying each weight of the set of idle weights with its corresponding blend shape to generate a weighted idle blend shape and then combine all of weighted idle blend shapes to generate an idle 3D face mesh. Such a configuration may allow the avatar to seamlessly transition to fall-back behaviour (expressions/motions/animations) if there is a lack of input from the user. In this way, the avatar can continue to be expressive even if not being actively/directly influenced by the user controlling it.

In an embodiment, the set of idle weights may be one of the plurality of sets of predefined weights. The set of idle weights may be determined according to the present emotion, which may be determined by the processed input data, e.g., processed game play data. As such, the output avatar module 27 may replace the previous set of average output weights with the set of idle weights so as to generate the idle 3D face mesh.

In an embodiment, the set of idle weights may be a set of average output weights (i.e. weighted combination of dynamic weights and baseline weights, as described above). This may allow other dynamic input data (e.g., from the audio input 12 and/or the user interface device 13) to be taken into account for determining the idle facial expression. The weighting of the other input sources may be increased by the processor 20. For example, in a situation where the imaging source 11 is inactive or not present but the audio input 12 is active, the user's live audio data is captured by the audio input 12 (e.g., a microphone) and transmitted to the processor 20. The input controller 21 of the processor may be configured to increase the weighting of the audio input 12 and at the same time reduce the weighting of the imaging source 11, e.g., set to zero. Such operation allows a dynamic facial expression DFE to be generated predominantly based on the audio data. When the user shouts loudly whilst playing the game, the processor 20 (e.g., the emotion state module of the internal controller 21) may determine that the user is in an "angry" emotion and accordingly may determine a set of dynamic weights that will lead to an "angry" dynamic facial expression DFE. Such an "angry" dynamic facial expression DFE may then be combined with a baseline facial expression BFE to generate an output facial expression OFE, as described above for the situation where the imaging source 11 is active.

At step 360, the processor 20 may be configured to update the base model using the output avatar so as to update at least one property of the virtual avatar.

In an embodiment, updating the base model may comprise replacing the present set of average output weights or idle weights with a new set of average output weights or idle weights determined at step 350.

The at least one property of the virtual avatar may include one or more of: position, rotation, appearance, facial expression, pose, or action. Updating the base model may comprise blending or updating at least one of the blend shape values for the virtual avatar, and/or updating the avatar pose or position.

At step 370, the processor 20 may be configured to render the updated base model to display the virtual avatar on a display screen (e.g., the display screen 24 shown in Figure 4).

The rendering of the updated base model may be achieved by any existing image rendering techniques, such as rasterization, ray casting, or ray tracing, etc. In some embodiments, the rendering of the updated base model may be implemented by one or more local computing resources, the user's electronic device 30 and/or the additional electronic device 35. In some embodiments, the rendering of the updated base model may be implemented in a distributed manner, e.g., by a plurality of computing resources distributed across a cloud-based network.

It will be appreciated that more than one virtual avatar may be rendered and displayed on the screen 24 at a given time. The users may be remote users or local users. For each local user, the process is as described above. A profile may be created for each local user, such that each of the plurality of input sources 10, including a given user interface device 13, imaging source 11, audio input 12, and network connection 14, may be associated with a particular local user. The local avatars may also be referred to as tracked avatars, as the facial tracking system 21 is used to update or control these avatars.

For a remote user, the processor 20 does not receive input data from a plurality of input sources associated with the remote user. Thus, remote avatars are rendered and controlled using a different process compared to local avatars. The facial tracking system 21 is not used for remote avatars. Instead, for remote avatars, as shown in Figure 2, the network connection 16 may be configured to transmit output avatar data from the remote user's electronic device 40 to the processor 20. The output avatar data allows the remote avatar to be rendered and displayed on the screen 24, together with the local user(s) avatars.

The output avatar data may include the facial tracking data from the facial tracking system 21 on the remote electronic device 40. An example of the format of a portion of output avatar data (e.g., using C# programming language) is as follows:
Public float [ ] BlendShapeWeights;
Public Vector3 HeadPosition;
Public Quaternion HeadRotation;
   Public Vector3 [ ] EyePositions;
   Public Quaternion [ ] EyeRotations;

Equivalently, the user's virtual avatar may be displayed on the remote user's electronic device 40 as a remote avatar. As such, there is a two-way communication channel between the user's electronic device 30 and the remote (or second) electronic device 40. The network connection 16 may comprise a peer-to-peer (p2p) connection between the user's electronic device 30 and the remote electronic device 40.

The output avatar data used to render the remote avatar may be transmitted over the network connection 16 after predetermined time intervals. For example, data may be sent over the network connection 16 every 30ms. This may improve reliability of the network connection 16 by reducing the bandwidth required compared to sending output avatar data more frequently, e.g. every frame.

The network connection 16 may transmit audio to and/or from the remote user and the local user.

The local avatars, or the local and remote avatars, may be configured to interact with each other on the display screen 24.

In an embodiment, certain inputs from the plurality of input sources 10 may trigger the user's virtual avatar to interact with either another local avatar or a remote avatar. For example, the input triggering the interaction may be from one of the user interface devices 13, the local application 15, or the network connection 16. Thus, in some embodiments the trigger may be a local user input, or a remote user input, or gameplay data.

The remote user may be able to trigger interactions between their virtual remote avatar and the user's virtual avatar on the display screen 24. The interactions may be sent (e.g. as instructions) through the network connection 16. Interactions that result in animations affecting the local avatar's blend shape values may be input to the processor 20 as local avatar facial tracking and pose information.

Examples of interactions between two avatars that may be associated with given inputs are: a high-five, hug, wave or greeting between the avatars.

Although particular embodiments of this disclosure have been described, it will be appreciated that many modifications/additions and/or substitutions may be made within the scope of the claims.

## Claims

1. A computer-implemented method for controlling a virtual avatar on an electronic device, the method comprising:
providing a base model that defines a virtual avatar associated with a user profile corresponding to a user;
receiving input data from at least one of a plurality of multimedia input sources;
processing the input data;
determining a baseline avatar and a dynamic avatar using the processed input data;
generating an output avatar based on the determined baseline avatar and the determined dynamic avatar;
updating the base model using the output avatar so as to update at least one property of the virtual avatar; and
rendering the updated base model to display the virtual avatar on a display screen.

2. A computer-implemented method as claimed in claim 1, wherein the plurality of input sources comprises an imaging source configured to provide images of the user's face.

3. A computer-implemented method as claimed in claim 2, wherein determining the baseline avatar and the dynamic avatar comprises respectively determining a baseline facial expression and a dynamic facial expression of the avatar, and wherein the dynamic facial expression of the avatar is determined using the images of the user's face.

4. A computer-implemented method as claimed in claim 3, wherein generating the output avatar comprises generating an output facial expression of the avatar based on the determined baseline facial expression and the determined dynamic facial expression.

5. A computer-implemented method as claimed in claim 4, wherein the base model comprises a plurality of facial expression models, each facial expression model being configured to define one aspect of facial expression of the avatar, and the base model comprises a plurality of sets of predefined weights, each predefined weight being applicable to configure one of the plurality of facial expression models and each set of predefined weights being applicable to the plurality of facial expression models for determining a baseline facial expression.

6. A computer-implemented method as claimed in claim 5, wherein the plurality of facial expression models comprise a plurality of blend shapes, each blend shape defining a different portion of a face mesh.

7. A computer-implemented method as claimed in claim 5 or 6, wherein determining the baseline facial expression comprises:
determining a set of predefined weights among the plurality of sets of predefined weights using the processed input data; and
generating the baseline facial expression by multiplying each weight of the set of predefined weights with its corresponding facial expression model to generate a weighted baseline facial expression model; and combining all of weighted baseline facial expression models.

8. A computer-implemented method as claimed in any of claims 5 to 7, wherein determining the dynamic facial expression comprises:
determining a set of dynamic weights using the images of the user's face, each dynamic weight being applicable to configure one of the plurality of facial expression models; and
generating the dynamic facial expression by multiplying each weight of the set of dynamic weights with its corresponding facial expression model to generate a weighted dynamic facial expression model; and combining all of weighted dynamic facial expression models.

9. A computer-implemented method as claimed in any of claims 5 to 8, wherein generating the output facial expression of the avatar comprises:
determining a first output weight and a second output weight;
generating a set of average output weights by:
multiplying each weight of the set of predefined weights with a first output weight to generate a modified first output weight;
multiplying each weight of the set of dynamic weights with a second output weight to generate a modified second output weight;
adding each modified first output weight and a corresponding modified second output weight to generate an average output weight; and
generating the output facial expression by multiplying each weight of the set of average output weights with its corresponding facial expression model to generate a weighted average facial expression model and then combining all of weighted average facial expression models.

10. A computer-implemented method as claimed in any of claims 8 or 9, wherein the set of dynamic weights and the first and second output weights are determined by an artificial neural network (ANN), wherein the ANN is configured to:
receive at least a portion of the input data and/or the processed input data, and
in response to the data received, output desired data or instructions;
and/or wherein determining the first and second output weights comprises:
providing a plurality of pairs of first output weight and second output weight, each of the plurality of pairs of first output weight and second output weight being associated with one of a plurality of predefined emotions;
determining an emotion using the processed input data; and
determining a pair of first output weight and second output weight from the plurality of pairs of first output weight and second output weight by mapping the determined emotion to the plurality of predefined emotions.

11. A computer-implemented method as claimed in claim 9 or 10, wherein the first output weight and the second output weight are set by the user.

12. A computer-implemented method as claimed in any of claims 5 to 11, wherein if the imaging source stops providing images for at least a period of time, the method comprising:
determining an idle facial expression; and
updating the base model by adding the idle facial expression to the base model; optionally, wherein determining the idle facial expression comprises:
determining a set of idle weights, each idle weight being applicable to configure one of the plurality of facial expression models; and
generating an idle facial expression by multiplying each weight of the set of idle weights with its corresponding facial expression model to generate a weighted idle facial expression model and then combining all of weighted idle facial expression models; optionally, wherein the set of idle weights is one of the plurality of sets of predefined weights.

13. A computer-implemented method as claimed in any of claims 2 to 12, wherein processing the input data comprises applying facial tracking to the images captured by the imaging source to construct a 3D mesh.

14. A computer-implemented method as claimed in any preceding claim, wherein the plurality of multimedia input sources comprises a memory, the memory comprising data related to the virtual avatar, or to at least one previous version of the virtual avatar, associated with the user profile; optionally, the method further comprising storing in the memory the updated base model and/or data defining the updated base model; and/or at least a portion of the input data, or processed input data;
and/or wherein the plurality of input sources further comprises an audio input configured to capture audio from the user; and wherein processing the input data comprises determining the volume of the audio captured by the audio input;
and/or wherein the plurality of input sources further comprises a user interface device, and the method comprises: receiving a user input from the user interface device.
and/or wherein the input data comprises gameplay data from a game the user is playing on the electronic device;
and/or wherein the input data comprises gameplay data from a game the user is playing on another electronic device which is in communication with the electronic device;
and/or wherein the plurality of multimedia input sources further comprises one or more of:
an audio input configured to capture audio from a user;
a user input device or user interface device;
a user electronic device or a network connection to an electronic device;
a game or an application executed on an electronic device; and/or
an AI, or game AI.

15. An electronic device configured to carry out the method of any of claims 1 to 14; optionally, wherein the electronic device is a smartphone and the smartphone comprises at least one of the plurality of input sources.
